(19) Europäisches Patentamt
European Patent Office
Office européen des brevets

(11) EP 1 241 200 B1

(12) EUROPÄISCHE PATENTSCHRIFT

(45) Veröffentlichungstag und Bekanntmachung des Hinweises auf die Patenterteilung:
**07.12.2005 Patentblatt 2005/49**

(21) Anmeldenummer: **02004257.8**

(22) Anmeldetag: **27.02.2002**

(51) Int Cl.[7]: **C08G 18/28**, C08G 18/48, C08G 18/50, C08G 18/71, C08G 18/73, C08G 18/75, C09D 175/08

(54) **Polyurethane und ihre Verwendung zur Verdickung wässriger Systeme**

Polyurethanes and their use as thickeners in aqueous systems

Polyuréthanes et leur utilisation comme épaississants de systèmes aqueux

(84) Benannte Vertragsstaaten:
**AT BE CH CY DE DK ES FI FR GB GR IE IT LI LU MC NL PT SE TR**

(30) Priorität: **12.03.2001 DE 1011794**

(43) Veröffentlichungstag der Anmeldung:
**18.09.2002 Patentblatt 2002/38**

(73) Patentinhaber:
- **BAYER AG**
  **51368 Leverkusen (DE)**
- **Borchers GmbH**
  **40789 Monheim (DE)**

(72) Erfinder:
- **Wamprecht, Christian, Dr.**
  **41472 Neuss (DE)**
- **Mazanek, Jan, Dr.**
  **51061 Köln (DE)**
- **Manshausen, Peter, Dr.**
  **50767 Köln (DE)**
- **Sauer, Frank, Dr.**
  **40764 Langenfeld (DE)**

(56) Entgegenhaltungen:
**US-A- 4 155 892**
**US-A- 4 180 491**
**US-A- 4 436 862**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 241 200 B1

## Beschreibung

Die Erfindung betrifft neue, als Verdickungsmittel für wässrige Systeme geeignete hydrophil/hydrophobe wasserlösliche oder -dispergierbare Polyurethane, die sich durch eine besonders effiziente Verdickungswirkung auszeichnen, sowie ihre Verwendung zur Verdickung wässriger Systeme.

Verdickungsmittel auf Polyurethanbasis für wässrige Systeme werden in zahlreichen Veröffentlichungen beschrieben (vgl. z.B. DE-A 1 444 243, DE-A 3 630 319, EP-A 0 031 777, EP-A 0 307 775, EP-A 0 495 373, US-A 4 079 028, US-A 4 155 892, US-A 4 499 233 oder US-A 5 023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen, die innerhalb der Kette, und/oder vorzugsweise endständig eingebaut sind.

Auch die nachstehend näher beschriebenen erfindungsgemäßen Verdickungsmittel entsprechen vorzugsweise dieser Definition.

Diese Polyurethanverdicker eignen sich als Hilfsmittel für die Einstellung von rhcologischen Eigenschaften von wässrigen Systemen wie z.B. Auto- und Industrielacken, Putz- und Anstrichfarben, Druck- und Textilfarben, Pigmentdruckpasten, pharmazeutischen und kosmetischen Zubereitungen, Pflanzenschutzformulierungen. Waschmittelzubereitungen oder Füllstoff- und Klebstoffdispersionen.

Obwohl die bekannten Polyurethanverdicker eine breite Anwendung finden, weisen sie für viele Einsatzbereiche eine zu geringe Verdickungswirkung im low-shear-Bereich auf. Dies hat zur Folge, dass sie entweder in vergleichsweise hohen Konzentrationen eingesetzt werden müssen oder aber dass andere Maßnahmen zur Erhöhung der Viskosität ergriffen werden müssen, wie z.B. die Erhöhung der Pigment- bzw. Feststoffkonzentration. In solchen Fällen kann es jedoch zu unerwünschten Veränderungen der anwendungstechnischen Eigenschaften, z.B. des Verlaufs, des Aushärtungsverhaltens, des Glanzes oder des Deckvermögens, der hergestellten Farben oder anderen Zubereitungen kommen.

Eine andere Möglichkeit, die low-shear-Viskosität zu erhöhen besteht darin, Verdicker auf Basis von Cellulose oder Polyacrylaten einzusetzen. Diese Produkte haben aber andere schwerwiegende Nachteile, wie z.B. verminderte Verträglichkeit in der Beschichtung oder schlechterer Verlauf und Glanz.

Die Aufgabe der vorliegenden Erfindung bestand also darin, verbesserte Verdickungsmittel für wässrige Systeme bei der Anwendung im low-shear-Bereich zu entwickeln.

Diese Aufgabe konnte mit der Bereitstellung der nachstehend näher beschriebenen erfindungsgemäßen hydrophil/hydrophoben wasserlöslichen oder -dispergierbaren Polyurethane gelöst werden. Erfindungswesentlich ist hierbei der Einsatz von urethangruppenhaltigen Polyetherpolyolen einer mittleren Funktionalität ≥ 4, gegebenenfalls im Gemisch mit anderen Polyetherpolyolen, wie nachstehend beschrieben wird.

Gegenstand der Erfindung sind wasserlösliche oder wasserdispergierbare Polyurethane, hergestellt unter Einhaltung eines NCO/OH-Äquivalentverhältnisses von 0,5 : 1 bis 1,2 : 1 in ein- oder mehrstufig erfolgter Reaktion aus

A) einem Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,
B) mindestens einem Monoisocyanat mit 8 bis 22 Kohlenstoffatomen,
C) mindestens einem (cyclo)aliphatischen und/oder aromatischen Diisocyanat,
D) gegebenenfalls mindestens einem Monoalkohol mit 8 bis 22 Kohlenstoffatomen und
E) gegebenenfalls mindestens einem Polyisocyanat einer mittleren Funktionalität > 2.

Ein weiterer Gegenstand der Erfindung ist ein Verfahren zur Herstellung wasserlöslicher oder wasserdispergierbarer Polyurethane, dadurch gekennzeichnet, dass unter Einhaltung eines NCO/OH-Äquivalentverhältnisses von 0,5 : 1 bis 1,2 : 1 in ein- oder mehrstufig erfolgter Reaktion

A) ein Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,
B) mindestens ein Monoisocyanat mit 8 bis 22 Kohlenstoffatomen,
C) mindestens ein (cyclo)aliphatisches und/oder aromatisches Diisocyanat,
D) gegebenenfalls mindestens ein Monoalkohol mit 8 bis 22 Kohlenstoffatomen und
E) gegebenenfalls mindestens ein Polyisocyanat einer mittleren Funktionalität > 2

miteinander umgesetzt werden.

Bei der erfindungsgemäßen Herstellung kann das urethangruppenhaltige Polyetherpolyol a2) durch teilweise Umsetzung des Polyetherpolyols a1) mit einem Diisocyanat hergestellt werden.

In einer weiteren Herstellungsvariante kann das urethangruppenhaltige Polyetherpolyol a2) durch teilweise Umsetzung des Polyetherpolyols a1) mit Polyisocyanaten einer mittleren Funktionalität ≥2 hergestellt werden.

Gegenstand der Erfindung ist auch die Verwendung der erfindungsgemäßen Polyurethane zur Verdickung wässriger Systeme.

Die Polyetherpolyolkomponente A besteht aus mindestens einem Gemisch aus einem Polyetherpolyol a1) der Formel (I)

$$R_1[\text{-O-(A)}_x\text{-H}]_y \qquad \text{(I)},$$

wobei

- $R_1$ für einen aliphatischen oder araliphatischen, gegebenenfalls Ethersauerstoffatome aufweisenden Kohlenwasserstoffrest mit 4 bis 36 Kohlenstoffatomen steht,
- A für Ethylenoxid- und/oder Propylenoxid-Reste mit der Maßgabe, dass mindestens 50 Mol-%, vorzugsweise 70 Mol-% und besonders bevorzugt 100 Mol-%, der Reste für Ethylenoxidreste stehen,
- x für eine Zahl von 30 bis 250 steht und
- y eine Zahl von 3 bis 18, bevorzugt 3 bis 6, bedeutet

und einen urethangruppenhaltigen Polyetherpolyol a2) der Formel (II)

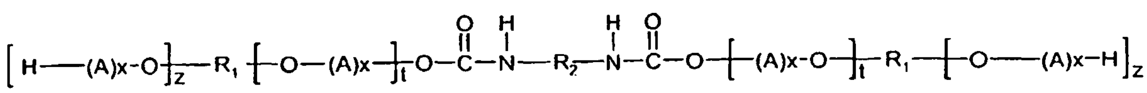

(II)

wobei

- $R_1$ für einen aliphatischen oder araliphatischen, gegebenenfalls Ethersauerstoffatome aufweisenden Kohlenwasserstoffrest mit 4 bis 36 Kohlenstoffatomen steht,
- $R_2$ für einen aliphatischen, araliphatischen, cycloaliphatischen oder aromatischen Rest mit 4 bis 12 Kohlenstoffatomen steht,
- A für Ethylenoxid- und/oder Propylenoxid-Reste mit der Maßgabe, dass mindestens 50 Mol-%, vorzugsweise 70 Mol-% und besonders bevorzugt 100 Mol-%, der Reste für Ethylenoxidreste stehen,
- x für eine Zahl von 30 bis 250 steht und
- z eine Zahl von 2 bis 16, bevorzugt 2, 3 oder 4 bedeutet und für t gilt: t = (y - z)

Die Monoisocyanatkomponente B) besteht aus mindestens einem Monoisocyanat der Formel (III)

$$R_3\text{-NCO} \qquad \text{(III)},$$

worin

$R_3$ für einen gegebenenfalls inerte Substituenten aufweisenden aliphatischen, cycloaliphatischen, aromatischen oder araliphatischen Kohlenwasserstoffrest mit 8 bis 22, vorzugsweise 10 bis 18 und besonders bevorzugt 12 bis 18 Kohlenstoffatomen steht.

Die Komponente C) besteht aus mindestens einem Diisocyanat der allgemeinen Formel (IV)

$$OCN\text{-}R_4\text{-}NCO \qquad (IV),$$

worin

$R_4$ für einen gegebenenfalls inerte Substituenten aufweisenden aliphatischen, araliphatischen, cycloaliphatischen oder aromatischen Rest mit 4 bis 22 Kohlenstoffatomen steht.

Die Komponente D) besteht aus mindestens einem Monoalkohol der allgemeinen Formel (V)

$$R_3\text{-}OH \qquad (V),$$

worin

$R_3$ die bei Formel (III) genannte Bedeutung hat.

Die Komponente E) besteht aus mindestens einem aliphatischen, araliphatischen, cycloaliphatischen, heterocyclischen oder aromatischen Polyisocyanat mit einer Funktionalität von >2.

Die Herstellung der dem Gemisch der Polyetheralkohole A) zugrunde liegenden Basispolyether a1) erfolgt in an sich bekannter Weise durch Alkoxylierung von entsprechenden mehrwertigen Alkoholen der Formel (VI)

$$R^1\text{—}\left[\text{—}OH\right]_y \qquad (VI),$$

wobei

$R^1$ und y die bei Formel (I) genannten Bedeutungen haben,

unter Verwendung von Ethylenoxid und gegebenenfalls Propylenoxid im Gemisch und/oder beliebiger Reihenfolge. Geeignete Starter sind beispielsweise Glycerin, Trimethylolpropan, Trimethylolethan, Pentaerythrit, Di-Trimethylolpropan, Sorbit, Zucker usw. Bevorzugt werden Glycerin, Trimethylolpropan und Sorbit eingesetzt, besonders bevorzugt werden Glycerin und Sorbit eingesetzt.

Die Herstellung des Polyetheralkoholgemsiches A), bestehend aus den Polyethern a1) und den urethangruppenhaltigen Polyethern a2), erfolgt durch teilweise Umsetzung der Polyether a1) mit mindestens einem organischen Isocyanat der Funktionalität ≥ 2. Dabei können bis zu 50 Mol-%, vorzugsweise bis zu 20 Mol-% und besonders bevorzugt bis zu 10 Mol-% der Polyether a1) mit Isocyanaten umgesetzt werden. Die Umsetzung erfolgt in einem Temperaturbereich von 0 bis 180°C, vorzugsweise 20 bis 160°C und besonders bevorzugt 60 bis 120°C.

Beispiele für die Monoisocyanatkomponente B) sind aliphatische Monoisocyanate wie z.B. 1-Octylisocyanat, 1-Nonylisocyanat, 1-Decylioscyanat, 1-Dodecylisocyanat, 1-Octadecylisocyanat usw. Bevorzugt sind Isocyanate mit 10 bis 18 Kohlenstoffatomen, besonders bevorzugt sind Monoisocyanate mit 12 bis 18 Kohlenstoffatomen.

Beispiele für Diisocyanate der Komponenten C) sind aliphatische Diisocyanate wie z.B. 1,4-Butandiisocyanat oder 1,6-Hexandiisocyanat; cycloaliphatische Diisocyanate wie z.B. 1-Isocyanato-3,3,5-trimethyl-5-isocyanatomethylcyclohexan (Isophorondiisocyanat), 1,3- und 1,4-Cyclohexandiisocyanat, 4,4'-Diisocyanatodicyclohexylmethan usw. sowie aromatische Diisocyanate wie z.B. 2,4-Diisocyanatotoluol und 4,4'-Diisocyanatodiphenylmethan.

Beispiele für die Monoalkoholkomponenten D) sind aliphatische Alkohole wie z.B. 1-Octanol, 2-Ethylhexanol, 1-Nonanol, 1-Decanol, 1-Dodecanol, 1-Tetradecanol, 1-Hexadecanol, 1-Octadecanol, 1-Docosanol usw. Bevorzugt sind Monoalkohole mit 10 bis 18 Kohlenstoffatomen, besonders bevorzugt sind Monoalkohole mit 12 bis 18 Kohlenstoffatomen.

Beispiele für die Polyisocyanatkomponente E) sind marktübliche Lackpolyisocyanate, das heißt vor allen die

bekannten Urethangruppen, Uretdiongruppen, Allophanatgruppen und insbesondere Biuretgruppen, Isocyanuratgruppen und Iminooxadiazindiongruppen aufweisenden Modifizierungsprodukte von einfachen Diisocyanaten, wie z.B. 1,6-Diisocyanatohexan, 1-Isocyanatcyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan und seine Gemische mit bis zu 35 Gew.-%, bezogen auf Gesamtgemisch, an 1-Methyl-2,6-diisocyanatocyclohexan; 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/ oder cycloaliphatisch gebundenen, freien Isocyanatgruppen eingesetzt. Ein geeignetes Polyisocyanat, das nicht die oben aufgeführten Gruppierungen enthält, ist 4-Isocyanatomethyl-1,8-octandiisocyanat.

Zu den Urethangruppen aufweisenden Lackpolyisocyanten gehören z.B. die Umsetzungsprodukte von 2,4- und gegebenenfalls 2,6-Diisocyanatotoluol oder 1-Methyl-2,4- und gegebenenfalls 1-Methyl-2,6-diisocyanatocyclohecan mit unterschüssigen Mengen an Trimethylolpropan, bzw. dessen Gemischen mit einfachen Diolen, wie z.B. den isomeren Propan- oder Butandiolen. Die Herstellung derartiger Urethangruppen aufweisender Lackpolyisocyanate in praktisch monomerfreier Form ist beispielsweise in der DE-A 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocy-anatohexan, deren Herstellung beispielsweise in EP-A 0 003 505, DE-A 1 101 394, US-A 3 358 010 oder US-A 3 903 127 beschrieben ist.

Ebenfalls zu den besonders bevorzugten, Isocyanuratgruppen aufweisenden, Lackpolyisocyanaten gehören insbesondere die Trimerisate bzw. Mischtrimerisate der oben beispielhaft genannten Diisocyanate, wie z.B. die Isocyanuratgruppen aufweisenden Polyisocyanate auf Basis Diisocyanatotoluol gemäß GB-A 1 060 430, GB-A 1 506 373 oder GB-A 1 485 564, die Mischtrimerisate von Diisocyanatotoluol mit 1,6-Diisocyanatohexan, die beispielsweise gemäß DE-A 1 644 809 oder DE-A 3 144 672 zugänglich sind, und insbesondere die aliphatischen, die aliphatischcycloaliphatischen und die cycloaliphatischen Trimerisate bzw. Mischtrimerisate auf Basis von 1,6-Diisocyanatohexan und/ oder Isophorondiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind.

Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,1 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

Die Herstellung der erfindungsgemäßen Polyurethane erfolgt ein- oder mehrstufig. Unter einer einstufigen Reaktion ist hierbei die Umsetzung der Gesamtmenge der Komponente a1) mit der Gesamtmenge der Komponenten B), C), gegebenenfalls D) und gegebenenfalls E) zu verstehen. Dabei entsteht gemäß der gewählten Einsatzmcnge der Komponente C) die Komponente A) in situ. Eine mehrstufige Reaktion besteht beispielsweise in der Umsetzung eines Teils der Komponenten a1) mit einem Teil der Komponente C) und anschließende Umsetzung der entstandenen Komponente A) mit den Komponenten B), dem Rest der Komponente C) sowie gegebenenfalls den Komponenten D) und E). Eine mehrstufige Reaktion kann auch aus einer Umsetzung des Polyethers a1) mit der Komponente B) und einer anschließenden Umsetzung dieser Vorstufe mit der Gesamtmenge der Komponente C) bestehen. Eine mehrstufige Reaktion kann ebenfalls bzw. zusätzlich aus einer separaten Umsetzung eines Teils oder der Gesamtmenge der Monoalkoholkomponenten D) mit einem molaren Überschuss an Diisocyanatkomponenten C) und anschließende Umsetzung des dabei resultierenden NCO-Prepolymeren mit der zuvor hergestellten Komponente A) und gegebenenfalls der Komponente E) bestehen. Die Reihenfolge der Umsetzungen ist hierbei weitgehend ohne Bedeutung, es muss durch die Auswahl der Einatzmengen der Komponenten A) bis C) und gegebenenfalls D) und E) nur gewährleistet sein, dass die Komponente A) gemäß der gemachten Definition entstehen kann.

Bei den auf diese Weise hergestellten erfindungsgemäßen Polyurethanen handelt es sich im allgemeinen um farblose bis gelbliche Wachse bzw. hochviskose Polymere mit Erweichungspunkten bzw. -bereichen innerhalb des Temperaturbereichs von 10 bis 80°C. Für den späteren Einsatz ist es oftmals vorteilhaft, die erfindungsgemäßen Polyurethane mit Zusätzen, wie z.B. Formulierungsmitteln, Lösungsmitteln, Wasser, Emulgatoren oder Stabilisatoren zu flüssigen Formulierungen zu vermischen.

Die erfindungsgemäßen Polyurethane eignen sich zur Verdickung von wässrigen bzw. überwiegend wässrigen Systemen wie Lacken, Farben, Leder- und Papierhilfsmittel, Zubereitungen für die Erdölförderung, Zubereitungen von Waschmitteln, Klebstoffen, Wachsen für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickern angedickt werden, um dann gegebenenfalls mit weiteren Zusätzen versetzt zu werden oder selbst zu wässrigen Zubereitungen zugesetzt zu werden. Die erfindungsgemäßen Verdicker könne auch in Gemischen mit anderen Verdickungsmitteln eingesetzt werden wie z.B. solchen auf Basis von Polyacrylaten, Cellulosederivaten oder anorganischen Verdickungsmitteln.

Beispiele für wässrige Systeme, die erfindungsgemäß verdickt werden können, sind wässrige Polyacrylatdispersionen, wässrige Dispersionen von Mischpolymerisaten olefinisch ungesättigter Monomerer, wässrige Polyvinylacetatdispersionen, wässrige Polyurethandispersionen, wässrige Polyesterdispersionen und insbesondere gebrauchsfertige Zubereitungen der oben bereits angesprochenen Art auf Basis derartiger Dispersionen oder Mischungen derartiger Dispersionen.

Die erfindungsgemäßen Verdickungsmittel können selbstverständlich in Substanz, vorzugsweise als Granulat oder gegebenenfalls Pulver, eingesetzt werden. Bevorzugte Verwendung finden jedoch flüssige Formulierungen, die neben den erfindungsgemäßen Polyurethanen Wasser, Lösungsmittel wie Butyldiglykol, Isopropanol, Methoxypropylacetat, Ethylen- und/oder Propylenglykol, nichtionische Emulgatoren, Tenside und/oder gegebenenfalls weitere Zusatzstoffe enthalten, weil dadurch die Einarbeitung der erfindungsgemäßen Verdickungsmittel in wässrige bzw. überwiegend wässrige Systeme wesentlich erleichtert wird.

Die gebrauchsfertigen Zubereitungen der erfindungsgemäßen Verdickungsmittel stellen besonders bevorzugt wässrige Lösungen oder Dispersionen mit einem Feststoffgehalt von 10 bis 80, vorzugsweise 30 bis 60 und besonders bevorzugt 40 bis 50 Gew.-% dar.

Die Menge an erfindungsgemäßen Verdickungsmitteln, die den wässrigen bzw. überwiegend wässrigen Systemen zum Erreichen der gewünschten Verdickung zugesetzt wird, hängt vom jeweiligen Verwendungszweck ab und kann vom Fachmann in wenigen Versuchen ermittelt werden. In der Regel werden 0,05 bis 10 Gew.-%, bevorzugt 0,1 bis 4 Gew.-%, besonders bevorzugt 0,1 bis 2 Gew.-% des erfindungsgemäßen Verdickungsmittels eingesetzt, wobei sich diese Prozentangaben auf den Feststoff des Verdickungsmittel einerseits und den Feststoffgehalt des zu verdikkenden wässrigen Systems andererseits beziehen.

Die Beurteilung der Wirksamkeit der erfindungsgemäßen Verdickungsmittel kann nach bekannten Methoden erfolgen, z.B. im Haake-Rotationsviskosimeter, im Stormer- oder Brookfield-Viskosimeter oder im ICI-Viskosimeter.

**<u>Beispiele</u>**

Abkürzungen:

DBTL: Dibutylzinn-IV-dilaurat
Desmorapid SO: Zinn-II-dioctoat

**<u>Eingesetzte Rohstoffe</u>**

**Polyether $a_1$:**

I Polyether auf Basis Glycerin und einem Gemisch aus Ethylenoxid und Propylenoxid (Verhältnis 75 : 25) mit einer OH-Zahl von 17,2 mg KOH/g

II Polyether auf Basis Glycerin und Ethylenoxid mit einer OH-Zahl von 15,2 mg KOH/g

III Polyether auf Basis Sorbit und einem Gemisch aus Ethylenoxid und Propylenoxid (Verhältnis 93,2 : 6,8) und einer OH-Zahl von 18,3 mg KOH/g

**<u>Herstellung der erfindungsgemäßen Polyurethane</u>**

**<u>Beispiel 1</u>**

880 g Polyether I wurden unter Stickstoff in einem 2-1-Glaskolben eingewogen und bei 1 mbar/125°C innerhalb von 5 Stunden von Spuren Wasser befreit. Dann wurden 31,0 g Stearylisocyanat, 5,0 g Hexamethylendiisocyanat und 0,09 g DBTL zugegeben und anschließend bei 120°C so lange gerührt, bis IR-spektroskopisch keine Isocyanatbande mehr nachzuweisen war. Danach wurden 19,6 g 1-Dodecanol zugegeben und 10 Minuten bei 120°C gerührt. Anschließend wurden 17,6 g Hexamethylendiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 2**

880 g Polyether I wurden unter Stickstoff in einem 2-l-Glaskolben eingewogen und bei 1 mbar/125°C innerhalb von 5 Stunden von Spuren Wasser befreit. Dann wurden 31,0 g Stearylisocyanat, 6,6 g Isophorondiisocyanat und 0,09 g DBTL zugegeben und anschließend bei 120°C so lange gerührt, bis IR-spektroskopisch keine Isocyanatbande mehr nachzuweisen war. Danach wurden 19,6 g 1-Dodecanol zugegeben und 10 Minuten bei 120°C gerührt. Anschließend wurden 23,2 g Isophorondiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 3**

821 g Polyether I wurden unter Stickstoff in einem 2-l-Glaskolben eingewogen und bei 1 mbar/125°C innerhalb von 5 Stunden von Spuren Wasser befreit. Dann wurden 29,0 g Stearylisocyanat, 4,8 g Hexamethylendiisocyanat und 0,09 g DBTL zugegeben und anschließend bei 120°C so lange gerührt, bis IR-spektroskopisch keine Isocyanatbande mehr nachzuweisen war. Danach wurden 26,4 g Stearylalkohol zugegeben und 10 Minuten bei 120°C gerührt. Anschließend wurden 21,8 g Isophorondiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 4**

880 g Polyether III wurden unter Stickstoff in einem 2-l-Glaskolben eingewogen und bei 1 mbar/125°C innerhalb von 5 Stunden von Spuren Wasser befreit. Dann wurden 28,4 g Stearylisocyanat und 0,09 g DBTL zugegeben und anschließend bei 120°C so lange gerührt, bis IR-spektroskopisch keine Isocyanatbande mehr nachzuweisen war. Danach wurden 22,4 g 1-Dodecanol zugegeben und 10 Minuten bei 120°C gerührt. Anschließend wurden 10,0 g Hexamethylendiisocyanat zugegeben und bei 120°C so lange gerührt, bis IR-spektroskopisch keine Isocyanatbande mehr nachzuweisen war. Anschließend wurden weitere 2,0 g Hexamethylendiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 5**

991 g Polyether III wurden unter Stickstoff in einem 2-1-Glaskolben eingewogen und bei 1 mbar/125°C innerhalb von 5 Stunden von Spuren Wasser befreit. Dann wurden 63,8 g Stearylisocyanat und 0,09 g Desmorapid® SO zugegeben und anschließend bei 120°C so lange gerührt, bis IR-spektroskopisch keine Isocyanatbande mehr nachzuweisen war. Danach wurden 1,5 g Isophorondiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 6**

991 g Polyether III wurden unter Stickstoff in einem 2-1-Glaskolben eingewogen und bei 1 mbar/125°C innerhalb von 5 Stunden von Spuren Wasser befreit. Dann wurden 63,8 g Stearylisocyanat und 0,09 g Desmorapid® SO zugegeben und anschließend bei 120°C so lange gerührt, bis IR-spektroskopisch keine Isocyanatbande mehr nachzuweisen war. Danach wurden 3,0 g Isophorondiisocyanat zugegeben und bei 120°C so lange gerührt, bis IR-spektroskopisch keine Isocyanatbande mehr nachzuweisen war. Es resultierte ein hochviskoses, schwach gelblich gefärbtes Polyurethanharz.

**Beispiel 7**

1102 g Polyether III wurden unter Stickstoff in einem 2-1-Glaskolben eingewogen und bei 1 mbar/125°C innerhalb von 5 Stunden von Spuren Wasser befreit. Dann wurden 29,6 g Stearylisocyanat, 21,2 g Dodecylisocyanat, 3,34 g Hexamethylendiisocyanat und 0,09 g Desmorapid® SO zugegeben und anschließend bei 120°C so lange gerührt, bis IR-spektroskopisch keine Isocyanatbande mehr nachzuweisen war. Es resultierte ein wachsartiges, schwach gelblich gefärbtes Polyurethanharz.

**Beispiel 8**

928 g Polyether II wurden unter Stickstoff in einem 2-1-Glaskolben eingewogen und bei 1 mbar/125°C innerhalb von 5 Stunden von Spuren Wasser befreit. Dann wurden 57,8 g Stearylisocyanat, 4,8 g Hexamethylendiisocyanat und 0,09 g Desmorapid® SO zugegeben und anschließend bei 120°C so lange gerührt, bis IR-spektroskopisch keine Isocyanatbande mehr nachzuweisen war. Es resultierte ein wachsartiges, schwach gelblich gefärbtes Polyurethanharz.

**Beispiel 9**

938 g Polyether I wurden unter Stickstoff in einem 2-1-Glaskolben eingewogen und bei 1 mbar/125°C innerhalb von 5 Stunden von Spuren Wasser befreit. Dann wurden 66,0 g Stearylisocyanat, 5,4 g Hexamethylendiisocyanat und 0,09 g Desmorapid® SO zugegeben und anschließend bei 120°C so lange gerührt, bis IR-spektroskopisch keine Isocyanatbande mehr nachzuweisen war. Es resultierte ein wachsartiges, schwach gelblich gefärbtes Polyurethanharz.

Die in den Beispielen 1 bis 9 hergestellten Polyurethanverdicker wurden zu 60 %igen Lösungen in Wasser, [1)]Levalin FD® und [1)]Emulgator WN® (Verhältnis 3 : 2 : 1) verarbeitet.

**Vergleichsbeispiel 1**

Polyurethanverdicker analog Beispiel 5, jedoch ohne die Verwendung von Isophorondiisocyanat:

991 g Polyether III wurden unter Stickstoff in einem 2-1-Glaskolben eingewogen und bei 1 mbar/125°C innerhalb von 5 Stunden von Spuren Wasser befreit. Dann wurden 63,8 g Stearylisocyanat und 0,09 g Desmorapid® SO zugegeben und anschließend bei 120°C so lange gerührt, bis IR-spektroskopisch keine Isocyanatbande mehr nachzuweisen war. Es resultierte ein hochviskoses, schwach gelblich gefärbtes Polyurethanharz, das 60%ig in Wasser, [1)]Levalin FD® und [1)]Emulgator WN® (Verhältnis 3 : 2 : 1) gelöst wurde.

**Vergleichsbeispiel 2**

Polyurethanverdicker analog Beispiel 7, jedoch ohne die Verwendung von Hexamethylendiisocyanat:

1102 g Polyether III wurden unter Stickstoff in einem 2-1-Glaskolben eingewogen und bei 1 mbar/125°C innerhalb von 5 Stunden von Spuren Wasser befreit. Dann wurden 29,6 g Stearylisocyanat, 21,2 g Dodecylisocyanat und 0,09 g Desmorapid® SO zugegeben und anschließend bei 120°C so lange gerührt, bis IR-spektroskopisch keine Isocyanatbande mehr nachzuweisen war. Es resultierte ein wachsartiges, schwach gelblich gefärbtes Polyurethanharz, das 60%ig in Wasser, [1)]Levalin FD® und [1)]Emulgator WN® (Verhältnis 3 : 2 : 1) gelöst wurde.

**Anwendungsbeispiele**

Die nachfolgenden Beispiele zeigen, dass mit den erfindungsgemäßen Verdickungsmitteln Dispersionsfarben hocheffizient verdickt werden können.

**Herstellung der Anstrichfarbe und Prüfung der Verdickungswirkung durch Viskositätsmessung.**

In einer 1000-ml-Flasche werden mit 100 Glasperlen (Ø 3 mm) folgende Bestandteile im Skandex 30 Min. dispergiert:

| | |
|---|---|
| AMP (Aminopropanol)[1)] | 1,25 g |
| Borchigen® ND (25 %ig in $H_2O$)[2)] | 6,8 g |
| Entschäumer Neocryl® AP 2860 (20 %ig)[3)] | 1,6 g |
| Verdicker (50 %ig) | 10,0 g |
| $TiO_2$ RHD-2 (Fa. Tioxide) | 112,5 g |
| Methoxybutanol | 8,5 g |

[1)] (2-Amino-2-methylpropanol-1, 90 %ig in Wasser), Angus Chemie GmbH, Essen
[2)] Netzmittel, Borchers Gmbl1, Monheim
[3)] Entschäumer, ICI Resins, Runcom, England

[1)]Handelsprodukte der Bayer AG

(fortgesetzt)

| | |
|---|---|
| Propylenglykol | 8,5 g |
| Butyldiglykol | 8,5 g |
| $H_2O$ | 22,35 g |
| Danach wird nach Zugabe von $H_2O$ | 50,0 g |
| Neocryl® XK 62 (42 %ig) [4)] | 270,0 g |
| | 500,0 g |

[4)] anionische Dispersion auf Basis Acrylat/Styrol, ICI Resins

weitere 30 Min. dispergiert. Die Farbe wird anschließend von den Glasperlen befreit. Nach einer Reifezeit von ca. 12 Std. wurden die Viskositätsmessungen wurden im low-shear-Bereich bei 10,3 $s^{-1}$ mit Haake-Viskosimeter VT 500 (Messkörper SV DIN) durchgeführt.

Die erhaltenen Prüfergebnisse bezüglich der Verdickungswirkung sind in der nachfolgenden Tabelle 1 aufgeführt.

Tabelle 1:

| **Verdickungswirkung von Polyurethanverdickern, charakterisiert durch die erzielte Lackviskosität** | |
|---|---|
| **Verdicker Beispiel Nr.** | **Viskosität (mPa·s) bei D = 10,3 $s^{-1}$** |
| 1 | 24100 |
| 2 | 25900 |
| 3 | 25600 |
| 4 | 22100 |
| 5 | 35000 |
| 6 | 33250 |
| 7 | 21100 |
| 8 | 24300 |
| 9 | 21500 |
| **Als Vergleich:** | |
| Acrysol RM 8[a)] | 6000 |
| Bermodol 2150[b)] | 6400 |
| Lanco Thix PUR 21[c)] | 13100 |
| Ser-Ad FX 1010[d)] | 10700 |
| Borchigel L 75 N[e)] | 15000 |
| Vergleichsbeispiel 1 | 20500 (Vergleich zu Nr. 5) |
| Vergleichsbeispiel 2 | 15200 (Vergleich zu Nr. 7) |

a) Rohm & Haas Corp.
b) Akzo Nobel
c) Lubrizol Corp.
d) CONDEA Servo BV
e) Borchers GmbH, Monheim

## Fazit

Die Ergebnisse der Viskositätsmessungen zeigen deutlich die verbesserte Verdickungswirkung der erfindungsgemäßen Verdickungsmittel im Vergleich zu kommerziell verfügbaren Produkten und zu den hergestellten Vergleichsbeispielen.

## Patentansprüche

1. Wasserlösliche oder -dispergierbare Polyurethane hergestellt in ein- oder mehrstufiger, unter Einhaltung eines NCO/OH-Äquivalentverhältnisses von 0,5 : 1 bis 1,2 : 1 erfolgter Reaktion als Umsetzungsprodukte aus

   A) einem Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,
   B) mindestens einem Monoisocyanat mit 8 bis 22 Kohlenstoffatomen,
   C) mindestens einem (cyclo)aliphatischen und/oder aromatischen Diisocyanat,
   D) gegebenenfalls mindestens einem Monoalkohol mit 8 bis 22 Kohlenstoffatomen und
   E) gegebenenfalls mindestens einem Polyisocyanat einer mittleren Funktionalität > 2.

2. Polyurethane gemäß Anspruch 1, **dadurch gekennzeichnet, dass** das Polyetherpolyol a1) eine mittlere Funktionalität von 3 hat.

3. Polyurethane gemäß Anspruch 1, **dadurch gekennzeichnet, dass** das Polyetherpolyol a1) eine mittlere Funktionalität von 4 bis 6 hat.

4. Polyurethane gemäß Anspruch 1, **dadurch gekennzeichnet, dass** das Monoisocyanat B) 10 bis 18 Kohlenstoffatome hat.

5. Polyurethane gemäß Anspruch 1, **dadurch gekennzeichnet, dass** das Monoisocyanat B) 12 bis 18 Kohlenstoffatome hat.

6. Polyurethane gemäß Anspruch 1, **dadurch gekennzeichnet, dass** das Diisocyanat C) ein (cyclo)aliphatisches Diisocyanat ist.

7. Polyurethane gemäß Anspruch 1, **dadurch gekennzeichnet, dass** der Monoalkohol D) 10 bis 18 Kohlenstoffatome hat.

8. Verfahren zur Herstellung wasserlöslicher oder wasserdispergierbarer Polyurethane gemäss Anspruch 1, **dadurch gekennzeichnet, dass** unter Einhaltung eines NCO/OH-Äquivalenlverhältnisses von 0,5 : 1 bis 1,2 : 1 in ein- oder mehrstufig erfolgter Reaktion

   A) ein Gemisch aus mindestens einem Polyetherpolyol a1) der mittleren Funktionalität ≥ 3 und mindestens einem urethangruppenhaltigen Polyetherpolyol a2) der mittleren Funktionalität ≥ 4,
   B) mindestens ein Monoisocyanat mit 8 bis 22 Kohlenstoffatomen,
   C) mindestens ein (cyclo)aliphatisches und/oder aromatisches Diisocyanat,
   D) gegebenenfalls mindestens ein Monoalkohol mit 8 bis 22 Kohlenstoffatomen und
   E) gegebenenfalls mindestens ein Polyisocyanat einer mittleren Funktionalität > 2

   miteinander umgesetzt werden.

9. Verfahren zur Herstellung von Polyurethanen gemäß Anspruch 8, **dadurch gekennzeichnet, dass** das urethangruppenhaltige Polyetherpolyol a2) durch teilweise Umsetzung des Polyetherpolyols a1) mit einem Diisocyanat hergestellt wird.

10. Verfahren zur Herstellung von Polyurethanen gemäß Ansprüchen 8 und 9, **dadurch gekennzeichnet, dass** das urethangruppenhaltige Polyetherpolyol a2) durch teilweise Umsetzung des Polyetherpolyols a1) mit Polyisocyanaten einer mittleren Funktionalität ≥ 2 hergestellt wird.

11. Verwendung der Polyurethane gemäß den Ansprüchen 1 bis 7 zur Verdickung von wässrigen Lacksystemen, Klebstoffen und anderen wässrigen Formulierungen.

## Claims

1. Water-soluble or water-dispersible polyurethanes produced in a one-stage or multi-stage reaction of the following components while maintaining an NCO/OH equivalent ratio of 0.5:1 to 1.2:1

   A) a mixture of at least one polyether polyol a1) having a mean functionality of ≥ 3 and at least one urethane group-containing polyether polyol a2) having a mean functionality of ≥ 4,
   B) at least one monoisocyanate with 8 to 22 carbon atoms,
   C) at least one (cyclo)aliphatic and/or aromatic diisocyanate,
   D) optionally at least one monoalcohol with 8 to 22 carbon atoms, and
   E) optionally at least one polyisocyanate having a mean functionality of > 2.

2. Polyurethanes according to claim 1, **characterised in that** the polyether polyol a1) has a mean functionality of 3.

3. Polyurethanes according to claim 1, **characterised in that** the polyether polyol a1) has a mean functionality of 4 to 6.

4. Polyurethanes according to claim 1, **characterised in that** the monoisocyanate B) has 10 to 18 carbon atoms.

5. Polyurethanes according to claim 1, **characterised in that** the monoisocyanate B) has 12 to 18 carbon atoms.

6. Polyurethanes according to claim 1, **characterised in that** the diisocyanate C) is a (cyclo)aliphatic diisocyanate.

7. Polyurethanes according to claim 1, **characterised in that** the monoalcohol D) contains 10 to 18 carbon atoms.

8. Process for the production of water-soluble or water-dispersible polyurethanes according to claim 1, **characterised in that** the following components are reacted with one another in a one-stage or multi-stage reaction while maintaining an NCO-OH equivalent ratio of 0.5:1 to 1.2:1

   A) a mixture of at least one polyether polyol a1) having a mean functionality of ≥ 3 and at least one urethane group-containing polyether polyol a2) having a mean functionality of ≥ 4,
   B) at least one monoisocyanate with 8 to 22 carbon atoms,
   C) at least one (cyclo)aliphatic and/or aromatic diisocyanate,
   D) optionally at least one monoalcohol with 8 to 22 carbon atoms, and
   E) optionally at least one polyisocyanate having a mean functionality of > 2.

9. Process for the production of polyurethanes according to claim 8, **characterised in that** the urethane group-containing polyether polyol a2) is produced by partial reaction of the polyether polyol a1) with a diisocyanate.

10. Process for the production of polyurethanes according to claims 8 and 9, **characterised in that** the urethane group-containing polyether polyol a2) is produced by partial reaction of the polyether polyol a1) with polyisocyanates having a mean functionality of ≥ 2.

11. Use of the polyurethanes according to claims 1 to 7, for thickening aqueous paint systems, adhesives and other aqueous formulations.

## Revendications

1. Polyuréthanes solubles dans l'eau ou dispersibles dans l'eau préparés dans une réaction réalisée en une ou plusieurs étapes en maintenant un rapport d'équivalent NCO/OH de 0,5:1 à 1,2:1 comme produits de réaction de

   A) un mélange d'au moins un polyétherpolyol a1) de fonctionnalité moyenne ≥ 3 et d'au moins un polyétherpolyol contenant un groupe uréthane a2) de fonctionnalité moyenne ≥ 4,
   B) au moins un monoisocyanate ayant de 8 à 22 atomes de carbone,
   C) au moins un diisocyanate (cyclo)aliphatique et/ou aromatique,
   D) éventuellement au moins un monoalcool ayant de 8 à 22 atomes de carbone et
   E) éventuellement au moins un polyisocyanate d'une fonctionnalité moyenne > 2.

**2.** Polyuréthanes selon la revendication 1, **caractérisés en ce que** le polyétherpolyol a1) présente une fonctionnalité moyenne de 3.

**3.** Polyuréthanes selon la revendication 1, **caractérisés en ce que** le polyétherpolyol a1) présente une fonctionnalité moyenne de 4 à 6.

**4.** Polyuréthanes selon la revendication 1, **caractérisés en ce que** le monoisocyanate B) possède de 10 à 18 atomes de carbone.

**5.** Polyuréthanes selon la revendication 1, **caractérisés en ce que** le monoisocyanate B) possède de 12 à 18 atomes de carbone.

**6.** Polyuréthanes selon la revendication 1, **caractérisés en ce que** le diisocyanate C) est un diisocyanate (cyclo) aliphatique.

**7.** Polyuréthanes selon la revendication 1, **caractérisés en ce que** le monoalcool D) possède de 10 à 18 atomes de carbone.

**8.** Procédé pour la préparation de polyuréthanes solubles dans l'eau ou dispersibles dans l'eau selon la revendication 1, **caractérisé en ce que** l'on fait réagir ensemble en maintenant un rapport d'équivalent NCO/OH de 0,5:1 à 1,2: 1 dans une réaction réalisée en une ou plusieurs étapes

A) un mélange d'au moins un polyétherpolyol a1) de fonctionnalité moyenne ≥ 3 et d'au moins un polyétherpolyol contenant un groupe uréthane a2) de fonctionnalité moyenne ≥ 4,
B) au moins un monoisocyanate ayant de 8 à 22 atomes de carbone,
C) au moins un diisocyanate (cyclo)aliphatique et/ou aromatique,
D) éventuellement au moins un monoalcool ayant de 8 à 22 atomes de carbone et
E) éventuellement au moins un polyisocyanate d'une fonctionnalité moyenne > 2.

**9.** Procédé pour la préparation de polyuréthanes selon la revendication 8, **caractérisé en ce que** le polyétherpolyol contenant un groupe uréthane a2) est préparé par réaction partielle du polyétherpolyol a1) avec un diisocyanate.

**10.** Procédé pour la préparation de polyuréthanes selon les revendications 8 et 9, **caractérisé en ce que** le polyétherpolyol contenant un groupe uréthane a2) est préparé par réaction partielle du polyétherpolyol a1) avec des polyisocyanates d'une fonctionnalité moyenne ≥ 2.

**11.** Utilisation des polyuréthanes selon les revendications 1 à 7 pour l'épaississement de systèmes aqueux de laques, de colles et d'autres formulations aqueuses.